# EUROPÄISCHE PATENTSCHRIFT

(11) **EP 1 946 968 B1**
(45) Veröffentlichungstag und Bekanntmachung des Hinweises auf die Patenterteilung: **13.04.2011**
(21) Anmeldenummer: 08000906.1
(22) Anmeldetag: 18.01.2008
(51) Int. Cl.: B60R 3/02, B61D 23/02, A61G 3/06

(54) **Zustiegs- und/oder Zufahrtshilfe für Fahrzeuge mit Personenbeförderung**
Access and/or entry assistance for vehicle for conveying persons
Assistance à l'entrée et/ou à l'accès pour véhicules de transport de personnes

(30) Priorität: 18.01.2007 DE 202007000912 U
(43) Veröffentlichungstag der Anmeldung: 23.07.2008
(73) Patentinhaber: Kircher, Werner, 34292 Ahnatal (DE)
(72) Erfinder: Kircher, Werner, 34292 Ahnatal (DE)
(74) Vertreter: Dantz, Jan Henning

(56) Entgegenhaltungen:
- US-A1- 2006 245 883

## Beschreibung

Die Erfindung betrifft eine Zustiegs- und/oder Zufahrtshilfe entsprechend dem Oberbegriff des Anspruchs 1. Solch ein Hilfsmittel ist zum Beispiel aus der US 2006/0245883 A1 bekannt.

Zustiegs- und Zufahrtshilfen dieser Art sind in vielfältiger Form bekannt. Sie finden Anwendung bei Fahrzeugen zur Personenbeförderung, beispielsweise bei Bussen und Schienenfahrzeugen des öffentlichen Nahverkehrs, und erleichtern den Ein- und Ausstieg bei Fahrzeugen dadurch, daß im Bereich von Haltestellen eine am jeweiligen Fahrzeug verschiebbar und ggf. auch verschwenkbar gelagerte Trittplatte in Form einer Rampe, eines linearen Tritts od. dgl. ausgefahren wird. Die Bezeichnung Zustiegs- und Zufahrtshilfe beinhaltet selbstverständlich auch deren Verwendung als Ausstiegs- und Ausfahrtshilfe.

Die beispielsweise aus Aluminium bestehende und mit einer rutschhemmenden Auflage versehene Trittplatte ist in einem hinteren Bereich mit Laufrädern versehen oder mit einem Laufräder aufweisenden Rollwagen gekoppelt, wobei die Laufräder in den Seitenteilen eines unterhalb des Fahrzeugbodens montierten Rahmens hin- und herfahrbar gelagert sind. Diese Konstruktion dient dem Zweck, die Trittplatte vorzugsweise vor dem Öffnen einer Fahrzeugtür zwischen einem Stand- und Wartebereich für zu befördernde Personen, beispielsweise einem Bahnsteig, und einer Bodenfläche im Einstiegsbereich des Fahrzeugs zu positionieren, um eventuell zwischen diesen beiden Bereichen bestehende Niveauunterschiede und/oder Spalte auszugleichen oder einfacher passierbar zu machen. Dadurch wird es beispielsweise auch Rollstuhlfahrern und Kinderwagenbenutzern ermöglicht, einfacher ein- bzw. auszusteigen. Nach Beendigung der Aus- und Einstiegsphase und evtl. nach dem Schließen der Fahrzeugtüren wird die Trittplatte wieder in die Ausgangsposition zurückgebracht.

Bei einer bekannten Zustiegs- und/oder Zufahrtshilfe der eingangs bezeichneten Gattung (DE 103 51 988 A1) sind nicht nur Laufschienen für die Laufräder, sondern auch die zum Hin- und Herfahren der Trittplatte benötigten Antriebsmittel in dem unterhalb oder innerhalb des Fahrzeugbodens befestigten Rahmen untergebracht. Zu den Antriebsmitteln gehören ein in einem rückwärtigen Bereich des Rahmens angeordneter Motor und ein mit diesem und der Trittplatte bzw. dem Rollwagen verbundener Kurbeltrieb. Dadurch ergibt sich zwar der Vorteil, daß die Trittplatte zusammen mit den zugehörigen Funktions- und Antriebsteilen und dem Rahmen als komplette Baueinheit am Fahrzeugboden montiert werden kann. Störend wirken jedoch der verhältnismäßig komplizierte und daher mit hohen Herstellungskosten verbundene Aufbau der Antriebsmittel und der Umstand, daß es bei Anwendung leistungsstarker Antriebe schwierig ist, die in der Regel für die Baueinheit geforderte geringe Bauhöhe einhalten.

In einer nicht vorveröffentlichten Anmeldung desselben Anmelders ist vorgeschlagen worden, anstelle des Kurbeltriebs eine Gewindespindel oder einen Zahnriemen vorzusehen (DE 10 2005 055 684). Auch derartige Antriebsmittel sind jedoch mit hohen Herstellungskosten verbunden bzw. bei geringen Bauhöhen nur dann anwendbar, wenn die Trittplatte auf ihrer Unterseite mit Ausnehmungen zur zumindest teilweisen Aufnahme der Zahnriemen od. dgl. versehen wird. Das wäre jedoch mit einer mechanischen Schwächung der Trittplatte verbunden und würde zusätzliche Maßnahmen zur Erfüllung der üblichen, an derartige Trittplatten gestellten statischen Anforderungen erforderlich machen.

Die der Erfindung zugrunde liegende Aufgabe besteht daher darin, die Zustiegs- und/oder Zufahrtshilfe der eingangs genannten Gattung derart auszubilden, daß sie trotz Anwendung eines leistungsstarken Antriebs mit geringer Bauhöhe und kostengünstig hergestellt werden kann.

Zur Lösung dieses Problems dienen die kennzeichnenden Merkmale des Anspruchs 1.

Die Erfindung bringt den Vorteil mit sich, daß die Antriebseinheit außer dem Motor nur einen preisgünstigen Riemen- oder Kettentrieb und eine zusätzliche Druckrolle erfordert. Aufgrund dieser Konstruktion ist es möglich, die Bauhöhe der gesamten Baueinheit auf einen Wert zu begrenzen, der nur wenig größer als der Durchmesser einer Antriebsrolle für das als Riemen oder Kette ausgebildete Antriebselement ist. Außerdem besteht die Möglichkeit, das Antriebselement in einem im wesentlichen geschlossenen Gehäuse anzuordnen und daher ohne wesentlichen Mehraufwand und auf einfache Weise vor Verunreinigungen zu schützen.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 eine schematische perspektivische Ansicht einer erfindungsgemäßen Zustiegs- und/oder Zufahrtshilfe mit einem Rahmen, einer an diesem ein- und ausfahrbar gelagerten Trittplatte und mit der Trittplatte gekoppelten Antriebselementen:
Fig. 2 eine schematische, perspektivische Ansicht einer in dem Rahmen der Zustiegs- und/oder Zufahrtshilfe nach Fig. 1 verschiebbar geführten, mit der Trittplatte gekoppelten Rollwagens;
Fig. 3 einen schematischen Längsschnitt durch den Rahmen und die Antriebsmittel der Zustiegs- und/oder Zufahrtshilfe nach Fig. 1;
Fig. 4 eine perspektivische und gegenüber Fig. 3 vergrößerte Teilansicht der Antriebsmittel;
Fig. 5 und 6 je einen teilweisen, jedoch vergrößerten Längsschnitt entsprechend Fig. 3 durch einen Teil der Antriebsmittel in zwei unterschiedlichen Stellungen einer Druckrolle; und
Fig. 7 eine schematische Seitenansicht von innen her auf drei Laufräder des Rollwagens nach Fig. 2 und ein zugehöriges Seitenteil des Rahmens der Zustiegs- und/oder Zufahrtshilfe nach Fig. 1.

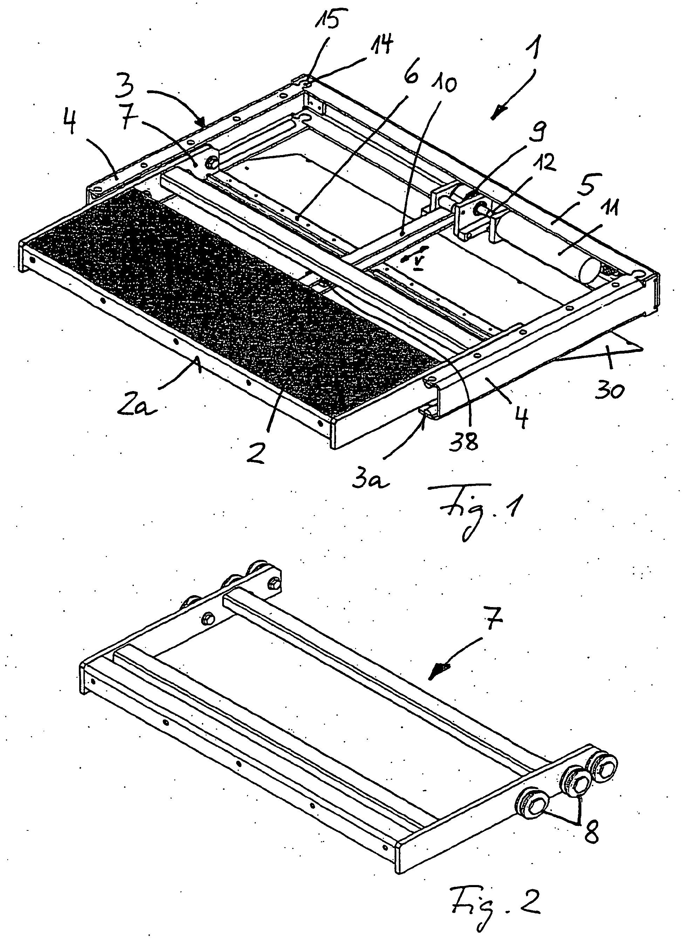

Fig. 1 zeigt eine Zustiegs- und/oder Zufahrtshilfe 1 mit einer Trittplatte 2, die z. B. an einem Autobus od. dgl. ausgebildet ist. Die Zustiegs- und/oder Zufahrtshilfe 1 nach Fig. 1 weist einen rechteckförmigen Rahmen 3 mit zwei parallelen Seitenteilen 4 auf, die an hinteren Enden durch ein Endprofil 5 und in einem davon beabstandeten, z. B. mittleren Teil durch wenigstens eine Stütze 6 verbunden sind. Die Seitenteile 4 sind vorzugsweise als nach innen offene, U-förmige Führungen ausgebildet, in denen ein Rollwagen 7 (Fig. 2) der Trittplatte 2 vorzugsweise mittels Laufrädern 8 verschiebbar geführt ist. Dadurch kann die Trittplatte 2 vom Rollwagen 7 parallel zu den Seitenteilen 4 vor- und zurückgeschoben und, bezogen auf das nicht gezeigte Fahrzeug, entweder über ein Vorderende 3a des Rahmens 3 hinaus in eine ausgefahrene, aus Fig. 1 ersichtliche Position vorgeschoben oder in eine eingefahrene Position zurückgezogen werden, in welcher eine Vorderkante 2a der Trittplatte 2 im wesentlichen bündig mit dem Vorderende 3a des Rahmens 3 abschließt. Der Rollwagen 7 bildet, wie Fig. 2 zeigt, ein Untergestell der Trittplatte 2, auf dessen vorderem Abschnitt ein an sich beliebiges Trittbrett 2b montiert werden kann, das z.B. aus einem Gitterrost, einem Blech mit einer rutschfesten, z.B. aus Gummi hergestellten Auflage od. dgl. versehen ist. Außerdem kann ein vorderer Teil der Trittplatte 2 in an sich bekannter Weise schwenkbar anstatt starr mit dem Rollwagen 7 gekoppelt sein, um im ausgefahrenen Zustand eine leicht nach unten geneigte, zu einem Stand- oder Wartebereich führende Rampe zu bilden, sofern der Stand- oder Wartebereich nicht niveaugleich mit dem Rahmen 3 angeordnet ist.

Ist eine Verschwenkung der Trittplatte nicht erforderlich, kann sie in einem hinteren Bereich auch selbst mit den Laufrädern 8 versehen sein und der Rollwagen 7 ganz weggelassen werden.

In einem vorderen Bereich des Rahmens 3 ist eine nicht dargestellte, drehbar gelagerte Umlenkrolle montiert, die mit einer Antriebsrolle 9 zusammenwirkt, die in der Nähe des Endprofils 5 drehbar gelagert ist. Beide Rollen sind in der Mitte zwischen den beiden Seitenteilen 4 angeordnet und weisen parallel zu den Achsen der Laufrolle 8 (Fig. 2) des Rollwagens 7 erstreckte Drehachsen auf. Die beiden Rollen dienen zur Führung eines endlosen, z. B. als Kette oder Zahnriemen ausgebildeten Antriebselements 10, das mit einem hinteren Ende des Rollwagens 7 oder der Trittplatte 2 verbunden und in der Mitte zwischen den Seitenteilen 4 und parallel zu diesen erstreckt ist. Zum Antrieb ist ein Motor 11 vorgesehen, der am Endprofil 5 montiert ist und eine koaxial zur Drehachse der Antriebsrolle 9 angeordnete Abtriebswelle 12 aufweist, die über eine nicht dargestellte Kupplung oder vorzugsweise direkt mit einer Antriebswelle der Antriebsrolle 9 verbunden ist. Der Motor 11 ist vorzugsweise als Reversiermotor ausgebildet, so daß seine Abtriebswelle wahlweise in der einen oder anderen Drehrichtung gedreht werden kann. Dadurch sind das Antriebselement 10 und mit ihm auch der Rollwagen 7 und die Trittplatte 2 in Richtung eines Doppelpfeils v (Fig. 1) hin- und herbewegbar.

An den Unterseiten der Seitenteile 4 und des Endprofils 5 und ggf. der Stützstreben(n) 6 kann ein den Rahmen 3 nach unten hin abdeckender, nicht dargestellter Boden befestigt sein, der den Innenraum des Rahmens 3 und die darin befindlichen Laufräder 8 und Antriebsteile 9 bis 12 vor Verunreinigungen schützt. Dieser Boden weist vorzugsweise eine schwenkbare Serviceklappe 30 (Fig. 1) auf, die nach unten schwenkbar ist und trotz der Abdeckung bei Bedarf einen einfachen Zugang zu den im hinteren Bereich des Rahmens 3 liegenden Antriebsteilen 9 bis 12 ermöglicht, was insbesondere für Servicezwecke (Reinigung, Reparatur, Wartung usw.) vorteilhaft ist und eine umständliche Demontage des ganzen Rahmens 3 od. dgl. unnötig macht.

Alternativ kann vorgesehen sein, den Boden nur bis zu der letzten hinteren Stützstrebe 6 zu erstrecken und die Serviceklappe 30 mittels eines Scharnierbandes od. dgl. schwenkbar an dieser Stützstrebe 6 zu befestigen.

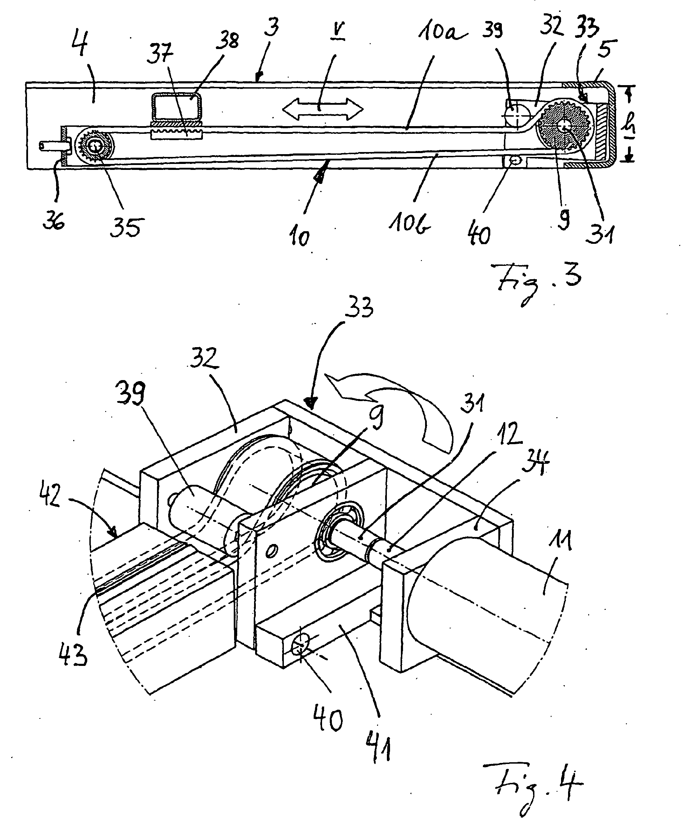

Fig. 3 bis 6 zeigen schematisch ein Ausführungsbeispiel einer erfindungsgemäßen, die Teile 9 bis 12 gemäß Fig. 1 aufweisenden Antriebsmittel. Danach ist die Antriebsrolle 9 auf einer Welle 31 befestigt, die zwischen zwei Seitenwänden 32 eines insgesamt mit den Bezugszeichen 33 bezeichneten Lagerbocks drehbar gelagert ist. Der Motor 11 ist an einer dritten Seitenwand 34 des Lagerbocks 33 befestigt, wobei seine Abtriebswelle 12 die Seitenwand 34 durchragt und durch eine nicht gezeigte Kupplung mit der koaxial zu ihr angeordneten Welle 31 fest verbunden ist.

Gemäß Fig. 3 ist an einer vom Endprofil 5 beabstandeten Stelle, z. B. an einer der Stützstreben 6, eine Umlenkrolle 35 drehbar befestigt, beispielsweise mit Hilfe eines dem Lagerbock 33 ähnlichen Lagerbocks 36. Das endlose Antriebselement 10, im Ausführungsbeispiel ein mit einer Innenverzahnung versehener Riemen, ist über die beiden mit einer entsprechenden Außenverzahnung versehenen Rollen 9 und 35 gelegt und weist daher in Fig. 3 ein oberes Trum 10a und ein unteres Trum 10b auf. Das obere Trum 10a ist mittels einer vorzugsweise gezahnten Befestigungsplatte 37 und nicht dargestellten Befestigungsschrauben an einem mit dem Rollwagen 7 (Fig. 2) oder der Trittplatte 2 (Fig. 1) fest verbundenen Kupplungsstück 38 befestigt. Durch Drehung der Antriebsrolle 9 in der einen oder anderen Drehrichtung kann daher das Kupplungsstück 38 und mit ihm der Rollwagen 7 bzw. die Trittplatte 2 parallel zur Richtung des Pfeils v (vgl. auch Fig. 1) hin- und hergefahren werden, wobei die Länge des oberen Trums 10a den maximalen Hub der Verschiebebewegungen festlegt.

Wie Fig. 3 bis 6 weiter erkennen lassen, ist die Höhe des für die Antriebsmittel zur Verfügung stehenden Raums durch die Höhe h (Fig. 3) des Rahmens 3 bzw. seines Endprofils 5 festgelegt. Wird daher wie gezeigt der Antriebsrolle 9 ein in Anbetracht dieser Höhe h maximaler Durchmesser gegeben, wie es zur Übertragung eines großen Drehmoments erwünscht ist, müsste der Umlenkrolle 35 ein entsprechender Durchmesser gegeben werden. Andernfalls wäre das obere Trum 10a schräg zu der vom Pfeil v angegebenen Transportbahn des Kupplungsstücks 38 angeordnet mit der Folge, daß es bei der Verschiebung des Kupplungsstücks 38 in Richtung des Pfeils v senkrecht zu diesem ständig mehr oder weniger stark gespannt würde. Das ist unerwünscht und sollte vermieden werden. Außerdem zeigen Fig. 1 und 3, daß die Bewegungsbahn der Trittplatte 2 bzw. des Rollwagens 7 einen großen Teil des hinteren, vom Rahmen 3 begrenzten Innenraums in Anspruch nimmt und sowohl die Umlenkrolle 35 als auch das obere Trum 10a unerhalb einer gedachten rückwärtigen Verlängerung dieser Bewegungsbahn liegen muss, damit die Trittplatte 2 bzw. der Rollwagen 7 ausreichend weit nach rückwärts bewegt werden können. Würde daher der Umlenkrolle 35 ein dem Durchmesser der Antriebsrolle 9 entsprechender Durchmesser gegeben, müsste die Bauhöhe h des Rahmens 3 entsprechend vergrößert werden.

Demgegenüber wird erfindungsgemäß einerseits vorgeschlagen, der Umlenrolle 35 einen wesentlich kleineren Durchmesser als der Antriebsrolle 9 zu geben und die Drehachse der Umlenkrolle 35 im Rahmen 3 so tief, d. h. in Fig. 3 so weit unten anzuordnen, wie es im Hinblick auf einen einwandfreien Lauf des unteren Trums 10b gerade noch möglich ist. Um dennoch eine Schräglage des oberen Trums 10a zu vermeiden, sieht die Erfindung andererseits eine von außen auf das obere Trum 10a wirkende Druckrolle 39 vor, die wie die Rollen 9 und 35 um eine parallel zu den Achsen der Laufräder 8 erstreckte Achse drehbar gelagert ist. Diese Druckrolle 39 ist zwischen den Rollen 35 und 9 und dabei möglichst dicht an der Antriebsrolle 9 angeordnet, indem sie z. B. wie diese in den Seitenwänden 32 des Lagerbocks 33 drehbar gelagert ist, wie Fig. 4 bis 6 deutlich zeigen. Außerdem ist die Druckrolle 39, deren Durchmesser ebenfalls zweckmäßig wesentlich kleiner als der der Antriebsrolle 9 ist, so tief im Rahmen 3 bzw. in Fig. 4 bis 6 so weit unten angeordnet, daß sie einerseits die Antriebsrolle 9 nach oben hin nicht überragt, andererseits das obere Trum 10a des Antriebselements 10 genau parallel zur Laufrichtung (Pfeil v) hält, wie insbesondere Fig. 3 zeigt. Zwischen der Druckrolle 39 und der Antriebsrolle 9 kann das Antriebselement 10 dann vergleichsweise steil auf die größere, vom Durchmesser der Antriebsrolle 9 bestimmte Höhe ansteigen, ohne dadurch die Parallelität des Trums 10a zur Laufrichtung der Trittplatte 2 in dem zwischen der Umlenkrolle 35 und der Druckrolle 39 liegenden Bereich zu beeinträchtigen. Eine etwaige Schieflage des unteren Trums 10b (Fig. 8) ist dabei unbedeutend.

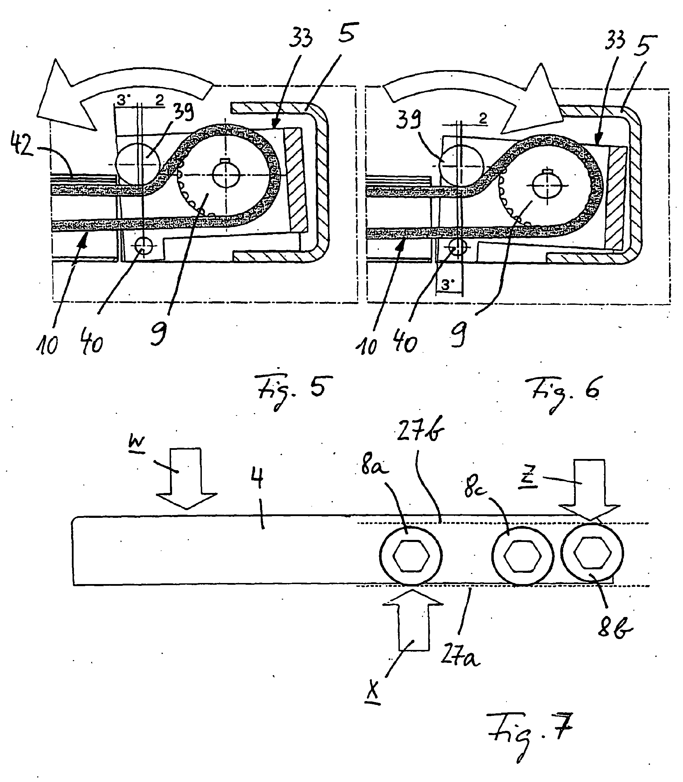

Mit besonderem Vorteil wird die Druckrolle 39 gleichzeitig als Spannrolle für das Antriebselement 10 verwendet. Bei richtiger Bemessung der Länge des Antriebselements 10 kann dieses bereits durch eine Verschiebung der Druckrolle 39 senkrecht zur Laufrichtung um ein paar Zehntel eines Millimeters in der erforderlichen Weise ge- oder entspannt werden, so daß es möglich wäre, die Druckrolle 39 senkrecht zu ihrer Drehachse und senkrecht zur Laufrichtung des Trums 10a verstellbar in den Seitenwänden 32 zu lagern. Eine besonders bevorzugte Ausführungsform ergibt sich jedoch dann, wenn der gesamte Lagerbock 33 mittels eines Schwenkzapfens 40 schwenkbar an einem in Fig. 4 gezeigten Klotz 41 (oder zwischen zwei derartigen Klötzen 41) gelagert wird, der fest mit dem Endprofil 5 oder einem anderen Rahmenteil verbunden ist. Es ist dann möglich, eine Spannung oder Entspannung des Antriebselements 10 allein dadurch zu erreichen, daß der gesamte Lagerbock 33 um wenige Grad in Pfeilrichtung (Fig. 5 und 6) um den Schwenkzapfen 40 verschwenkt wird, dessen Achse parallel zur Drehachse der Antriebsrolle 9 angeordnet ist. Zur Arretierung der gewünschten Spannung des Antriebselements 10 kann eine nicht gezeigte Feststellschraube od. dgl. dienen.

Die beschriebenen Maßnahmen bringen den Vorteil mit sich, daß einerseits der Durchmesser der Antriebsrolle 9 ausreichend groß gewählt werden kann, andererseits dennoch im Rahmen 3 ausreichend Platz für eine lineare Bewegung des Kupplungsstücks 38 verbleibt, ohne daß bei diesen Bewegungen ein unterschiedlicher Zug oder Druck auf das Trum 10a ausgeübt wird. Außerdem ergibt sich bei Anwendung der Serviceklappe 30 (Fig. 1) der zusätzliche Vorteil, daß bei geöffneter Serviceklappe 30 die beschriebenen Antriebsmittel sämtlich von unten her zugänglich sind, ohne daß eine umständliche Demontage eines am Rahmen befestigten Bodens od. dgl. erforderlich wäre.

Zur Schonung des Antriebselements 10 vor Verunreinigungen ist es zweckmäßig, dieses mit einem zwischen den Rollen 35 und 39 erstreckten, im wesentlichen geschlossenen Schutzgehäuse 42 (Fig. 4 bis 6) zu umgeben. Dieses ist an seiner Oberseite mit einem Längsschlitz 43 (Fig. 4) versehen, in dem das Kupplungsstück 38 oder ein Teil davon hin- und herverschiebbar geführt ist. Der Längsschlitz 43 erstreckt sich parallel zur Laufrichtung v des Kupplungsstücks 38 und ist zweckmäßig mit einer flexiblen Dichtlippe versehen, die stets nur dort geöffnet ist, wo sich das Kupplungsstück 38 gerade befindet. Bei der Anwendung des Schutzgehäuses 42 kann der Boden einschließlich Serviceklappe 30 (Fig. 1) unter Umständen ganz entfallen, weil die Läufräder 8 weniger empfindlich als ein Zahnriemen od. dgl. auf Verunreinigungen reagieren.

Ein weiteres bevorzugtes Ausführungsbeispiel der Erfindung enthält nach Fig. 7 eine besondere Anordnung der Laufräder 8. In Fig. 7 sind drei Paare von Laufrädern 8a, 8b und 8c dargestellt, die in den einander gegenüberliegenden Seitenteilen 4 des Rahmens 3 gerührt sind. Dabei geben punktiert dargestellte Linien 27a, 27b die Lagen von unteren bzw. oberen Laufschienen an einem der beiden beteiligten Seitenteile 4 an. Damit die Laufräder 8 zwischen diesen Laufschienen leichtgängig abrollen können und nicht verklemmen, sind die beiden Laufschienen 27a, 27b um ein Maß beabstandet, das etwas größer als der Durchmesser der Laufräder 8a, 8b und 8c ist. Außerdem ist das in Ausfahrrichtung der Trittplatte 2 erste Laufradpaar 8a auf den unteren Laufschienen 27a so abgestützt, daß es zu den oberen Laufschienen 27b etwas Luft hat. Dagegen ist das hintere Laufradpaar 8b an den oberen Laufschienen 27b so abgestützt, daß es zu den unteren Laufschienen 27a etwas Luft hat. Dadurch wird erreicht, daß bei Ausübung einer Kraft in Richtung eines Pfeils w, wie dies im ausgefahrenen Zustand der Fall sein wird, kein Kippmoment auf die Trittplatte 2 bzw. den Rollwagen 7 ausgeübt wird. Im eingefahrenen Zustand könnten sich jedoch aufgrund üblicher Vibrationen od. dgl. Kippmomente ergeben, die das Radpaar 8a nach oben und das Radpaar 8b nach unten drücken (Pfeile x und z), was unerwünschte Klappergeräusche verursachen könnte. Erfindungsgemäß ist daher wenigstens ein drittes, mittleres Laufradpaar 8c vorgesehen, das vorzugsweise höhenverstellbar ist und so angeordnet wird, das es ebenfalls auf den unteren (oder oberen) Laufschienen 27a (bzw. 27b) abgestützt ist. Ist dieses Laufradpaar 8c z. B. nahe dem hinteren Laufradpaar 8b angeordnet (Fig. 7), dann ist der Rollwagen 7 bzw. die Trittplatte 2 sowohl im ausgefahrenen wie auch im eingefahrenen Zustand fest auf den Laufradpaaren 8a, 8c abgestützt, so daß Kippbewegungen weitgehend verhindert werden.

Die Erfindung ist nicht auf die beschriebenen Ausführungsbeispiele beschränkt, die auf vielfache Weise abgewandelt werden können. Bei Rahmen 3 kleiner Baugrößen kann es ausreichend sein, die Stützstrebe 6 nur am Vorderende 3a des Rahmens 3 anstatt auch oder nur in einem mittleren Teil vorzusehen, gegebenenfalls die Serviceklappe 30 entfallen zu lassen und statt dessen z. B. einen leicht demontierbaren Boden an der Unterseite des Rahmens 3 vorzusehen. Weiter ist die Erfindung nicht auf die beschriebene Ausbildung der Antriebseinheit beschränkt. Wird z. B. die Druckrolle 39 verschiebbar am Rahmen 3 gelagert, könnten der Motor 11 und die Antriebsrolle 9 auch starr im Rahmen 3 bzw. im Endprofil 5 gelagert sein. Außerdem könnte das Antriebselement 10 aus einem Riemen od. dgl. hergestellt sein, der z.B. zwei durch das Kupplungsstück 38 miteinander verbundene Enden aufweist. Möglich wäre auch, das untere Trum 10b ganz wegzulassen und die beiden Enden des Antriebselements 10 auf die Rollen 9 und 35 aufzuwickeln bzw. von diesen abzuwickeln. Weiterhin kann es zur Erzielung einer leichtgängigen Verschiebbarkeit der Trittplatte 2 bzw. des Rollwagens 7 zweckmäßig sein, die Laufräder 8 anstatt wie üblich aus Stahl aus einem gummiartigen Material oder einem Kunststoff herzustellen oder mit einer Beschichtung aus Gummi oder Kunststoff zu versehen. Weiterhin ist klar, daß die Antriebswelle 12 (Fig. 9) auch die Ausgangswelle eines dem Motor 11 nachgeschalteten Getriebes sein könnte. Schließlich versteht sich, daß die verschiedenen Merkmale auch in anderen als den beschriebenen und dargestellten Kombinationen angewendet werden können.

## Patentansprüche

1. Zustiegs- und/oder Zufahrtshilfe für Fahrzeuge mit Personenbeförderung, enthaltend einen Rahmen (3) mit zwei parallelen Seitenteilen (4) und einem diese verbindenden Endprofil (5), eine in den Seitenteilen (4) längs einer Bewegungsbahn ein- und ausfahrbar gelagerte Trittplatte (2) und am Rahmen (3) abgestützte, zwischen den beiden Seitenteilen (4) angeordnete und einen Antriebsmotor (11) aufweisende Antriebsmittel für die Trittplatte (2), wobei der Antriebsmotor (11) in einem hinteren Bereich des Rahmens (3) angeordnet ist, wobei die Antriebsmittel ein als Kette oder Riemen ausgebildetes Antriebselement (10) enthalten, das über wenigstens eine unterhalb der Bewegungsbahn angeordnete Umlenkrolle (35) und eine im Bereich des Endprofils (5) und in einem hinteren Bereich des Rahmens (3) angeordnete, mit dem Antriebsmotor (11) gekoppelte Antriebsrolle (9) geführt ist, **dadurch gekennzeichnet, dass** die Antriebsrolle (9) einen größeren Durchmesser als die Umlenkrolle (35) aufweist und so in einem vom Rahmen (3) umgrenzten Innenraum angeordnet ist, daß sie teilweise in eine gedachte rückwärtige Verlängerung der Bewegungsbahn ragt, und daß der Antriebsrolle (9) eine von außen auf ein oberes Trum (10a) des Antriebselements (10) wirkende Druckrolle (39) derart zugeordnet ist, dass das obere Trum (10a) in einem zwischen ihr und der Umlenkrolle (35) liegenden Bereich im wesentlichen parallel zur Bewegungsbahn, jedoch unterhalb von dieser und deren gedachter rückwärtiger Verlängerung angeordnet ist.

2. Zustiegs- und/oder Zufahrtshilfe nach Anspruch 1, **dadurch gekennzeichnet, daß** der Antriebsmotor (11) eine mit der Antriebsrolle (9) direkt verbundene Antriebswelle (12) aufweist.

3. Zustiegs- und/oder Zufahrtshilfe nach Anspruch 1 oder 2, **dadurch gekennzeichnet, daß** das Antriebselement (10) ein auf seiner Innenseite gezahnter Riemen ist und die Umlenk- und Antriebsrolle (9, 35) mit Außenverzahnungen versehen sind.

4. Zustiegs- und/oder Zufahrtshilfe nach einem der Ansprüche 1 bis 3, **dadurch gekennzeichnet, daß** die Seitenteile (4) mit Führungsschienen (27) versehen sind, die zur Führung von Laufrädern (8) der Trittplatte (2) oder eines mit dieser gekoppelten Rollwagens (7) eingerichtet sind, und daß die Laufräder (8), die Umlenkrolle (35) und die Antriebsrolle (9) um parallel zueinander angeordnete Achsen drehbar sind.

5. Zustiegs- und/oder Zufahrtshilfe nach Anspruch 4, **dadurch gekennzeichnet, daß** das Antriebselement (10) endlos ausgebildet oder zwei zu einem endlosen Antriebselement (10) verbundene Enden aufweist und das obere Trum (10a) an der Trittplatte (2) oder dem Rollwagen (7) befestigt ist.

6. Zustiegs- und/oder Zufahrtshilfe nach einem der Ansprüche 1 bis 5, **dadurch gekennzeichnet, daß** der Antriebsmotor (11) an dem Endprofil (5) befestigt ist.

7. Zustiegs- und/oder Zufahrtshilfe nach einem der Ansprüche 1 bis 6, **dadurch gekennzeichnet, daß** die Umlenkrolle (35) starr in einer die beiden Seitenteile (4) verbindenden Stützstrebe (6) gehalten und die Druckrolle (39) bewegbar am Endprofil (5) gelagert ist.

8. Zustiegs- und/oder Zufahrtshilfe nach Anspruch 7, **dadurch gekennzeichnet, daß** die Druckrolle (39), die Antriebsrolle (9) und der Antriebsmotor (11) an einem Lagerbock (33) montiert sind, der mittels eines Schwenkzapfens (40), der eine zur Achse der Druckrolle (39) parallele Schwenkachse hat, am Endprofil (5) oder einem hinteren Ende der Seitenteile (4) schwenkbar gelagert ist.

9. Zustiegs- und/oder Zufahrtshilfe nach einem der Ansprüche 1 bis 8, **dadurch gekennzeichnet, daß** das Antriebselement (10) von einem im wesentlichen geschlossenen Gehäuse (42) umgeben ist.

10. Zustiegs- und/oder Zufahrtshilfe nach Anspruch 9, **dadurch gekennzeichnet, daß** das Gehäuse (42) einen nach oben offenen, mit wenigstens einer Dichtlippe abgedeckten Längsschlitz (43) aufweist.

11. Zustiegs- und/oder Zufahrtshilfe nach einem der Ansprüche 1 bis 10, **dadurch gekennzeichnet, daß** an der Unterseite des Rahmens (3) ein den Innenraum abdeckender Boden befestigt ist, der eine nach unten schwenkbare, zumindest über den Bereich der Antriebsmittel erstreckte Serviceklappe (30) aufweist.

12. Zustiegs- und/oder Zufahrtshilfe nach einem der Ansprüche 4 bis 11, **dadurch gekennzeichnet, daß** die Trittplatte (2) oder der Rollwagen (7) wenigstens drei hintereinander angeordnete Paare von Laufrädern (8a, 8b, 8c) enthält, wobei ein in Ausfahrrichtung vorderes Paar (8a) an einer unteren Laufschiene (27a), ein in Ausfahrrichtung hinteres Paar (8b) an einer oberen Laufschiene (27b) und ein zum Ausgleich von Toleranzen und zur Vermeidung von Kippbewegungen bestimmtes mittleres Paar (8c) von Laufrädern an der unteren Laufschiene (27a) anliegt.

13. Zustiegs- und/oder Zufahrtshilfe nach einem der Ansprüche 4 bis 12, **dadurch gekennzeichnet, daß** die Laufräder (8) mit einer Beschichtung aus Gummi oder Kunststoff versehen sind oder aus Gummi oder Kunststoff bestehen.

## Claims

1. Boarding and/or access aid for vehicles with passenger transportation, comprising: a frame (3) with two parallel side parts (4) and an end profile (5) which connects said parts, a step plate (2) attached in the side parts (4) along a movement path in such a way that it can be shifted in and out, and drive means for the step plate (2) braced on the frame (3) arranged between the two side parts (4), and comprising a drive motor (11) arranged at a rear area of the frame (3), said drive means comprising a drive element (10) designed as a chain or belt, which is guided over at least one deflection roller (35), which is arranged beneath the movement path, and a drive roller (9), which is arranged in the area of the end profile (5) and in a rear area of the frame (3), and coupled with the drive motor (11), **characterized in that** the drive roller (9) has a larger diameter than the deflection roller (35) and is arranged in an interior space delimited by the frame (3) in such a way that it extends partially into an imaginary backward extension of the movement path, and the drive roller (9) is associated with a pressing roller (39), which acts from the exterior onto an upper strand (10a) of the drive element (10) in such a way that the upper strand (10a) is arranged in an area which is located between the pressing roller (39) and the deflection roller (35) substantially parallel to the movement path, but beneath said path and its imaginary backward extension.

2. A boarding and/or access aid according to claim 1, wherein the drive motor (11) has a drive shaft (12) which is connected directly to the drive roller (9).

3. A boarding and/or access aid according to claim 1 or 2, wherein the drive element (10) is a belt which is toothed on its interior side, and the deflection and drive rollers (9, 35) are provided with external toothings.

4. A boarding and/or access aid according to any one of claims 1-3, wherein the side parts (4) are provided with guide rails (27), which are installed for guiding running wheels (8) of the step plate (2) or of a rolling cart (7) coupled to the plate, and wherein the running wheels, the deflection roller (35) and the drive roller (9) are rotatable about parallel axes.

5. A boarding and/or access aid according to claim 4, wherein the drive element (10) is endless, or the drive element (10) has two ends that are connected to an endless drive element (10), and wherein the upper strand (10a) is attached to the step plate (2) or to the rolling cart (7).

6. A boarding and/or access aid according to any one of claims 1-5, wherein the drive motor (11) is attached to the end profile (5).

7. A boarding and/or access aid according to any one of claims 1-6, wherein the deflection roller (35) is held rigidly in a support bar (6) connecting the two side parts (4), and the pressing roller (39) is attached movably on the end profile (5).

8. A boarding and/or access aid according to claim 7, wherein the pressing roller (39), the drive roller (9) and the drive motor (11) are mounted in a bearing block (33), which is attached in such a way that it can be swiveled by swiveling pin (40), which has a swivel axis that is parallel to the axis of the pressing roller (39) on the end profile (5) or a rear end of the side parts (4).

9. A boarding and/or access aid according to any one of claims 1-8, wherein the drive element (10) is surrounded by a substantially closed housing (42).

10. A boarding and/or access aid according to claim 9, wherein the housing has a longitudinal slit (43), which is open upward and covered with at least one sealing lip.

11. A boarding and/or access aid according to any one of claims 1-10, wherein, on the bottom side of the frame (3), a floor covering the internal space is attached, which floor 13 presents a service flap (30), which can be swiveled downward, and which extends over at least a part of the drive means.

12. A boarding and/or access aid according to any one of claims 4-11, wherein the step plate (2) or the rolling cart (7) contains at least three successively arranged pairs of running wheels (8a, 8b, 8c), wherein a first pair (8a), in a front position in the deployment direction, is applied against a lower running rail (27a), a second pair (8b), which is in the rear in the deployment direction, is applied on an upper running rail (27b), and a middle pair of running wheels (8c) is applied on the lower running rail (27a) to compensate for tolerances and to prevent tipping movements.

13. A boarding and/or access aid according to any one of claims 4-12, wherein the running wheels (8) are made of a coating of rubber or plastic, or consist of rubber or plastic.

## Revendications

1. Aide à l'entrée et/ou à l'accès pour véhicules de transport de personnes, comprenant un cadre (3) avec deux parties latérales (4) parallèles et un profilé d'extrémité (5) reliant celles-ci, une palette de marchepied (2) supportée dans les parties latérales (4) de façon à pouvoir être rentrée et sortie le long d'une trajectoire de mouvement et des moyens d'entraînement supportés sur le cadre (3), disposés entre les deux parties latérales (4) et présentant un moteur d'entraînement (11) pour la palette de marchepied (2), dans laquelle le moteur d'entraînement (11) est disposé dans une zone arrière du cadre (3), dans laquelle les moyens d'entraînement comprennent un élément d'entraînement (10) conformé comme une chaîne ou une courroie qui est guidé sur au moins un rouleau de renvoi (35) disposé en dessous de la trajectoire de déplacement et un rouleau d'entraînement (9) disposé dans la zone du profilé d'extrémité (5) et dans une partie arrière du cadre (3) et couplé avec le moteur d'entraînement (11), **caractérisée en ce que** le rouleau d'entraînement (9) a un plus grand diamètre que le rouleau de renvoi (35) et est disposé dans un espace intérieur délimité par le cadre (3) de telle façon qu'il dépasse partiellement dans un prolongement imaginaire de la trajectoire de déplacement vers l'arrière, et **en ce que** le rouleau d'entraînement (9) est associé à un rouleau presseur (39) agissant par l'extérieur sur un brin supérieur (10a) de l'élément d'entraînement (10) de telle manière que le brin supérieur (10a) est disposé sensiblement parallèlement à la trajectoire de déplacement dans une zone située entre celle-ci et le rouleau de renvoi (35), mais en dessous de celle-ci et de son prolongement imaginaire vers l'arrière.

2. Aide à l'entrée et/ou à l'accès selon la revendication 1, **caractérisée en ce que** le moteur d'entraînement (11) présente un arbre d'entraînement (12) en liaison directe avec le rouleau d'entraînement (9).

3. Aide à l'entrée et/ou à l'accès selon la revendication 1 ou 2, **caractérisée en ce que** l'élément d'entraînement (10) est une courroie dentée sur sa face intérieure et les rouleaux de renvoi et d'entraînement (9, 35) sont munis de dentures externes.

4. Aide à l'entrée et/ou à l'accès selon l'une des revendications 1 à 3, **caractérisée en ce que** les parties latérales (4) sont munies de rails de guidage (27) conçus pour le guidage de roues de roulement (8) de la palette de marchepied (2) ou d'un chariot roulant (7) couplé à celle-ci, et **en ce que** les roues de roulement (8), le rouleau de renvoi (35) et le rouleau d'entraînement (9) sont capables de rotation autour d'axes parallèles les uns aux autres.

5. Aide à l'entrée et/ou à l'accès selon la revendication 4, **caractérisée en ce que** l'élément d'entraînement (10) est conçu sans fin ou présente deux extrémités assemblées pour former un élément d'entraînement (10) sans fin et le brin supérieur (10a) est fixé à la palette de marchepied (2) ou au chariot roulant (7).

6. Aide à l'entrée et/ou à l'accès selon l'une des revendications 1 à 5, **caractérisée en ce que** le moteur d'entraînement (11) est fixé sur le profilé d'extrémité (5).

7. Aide à l'entrée et/ou à l'accès selon l'une des revendications 1 à 6, **caractérisée en ce que** le rouleau de renvoi (35) est retenu de façon rigide dans un étai (6) reliant les deux parties latérales (4) et le rouleau presseur (39) est supporté de manière mobile sur le profilé d'extrémité (5).

8. Aide à l'entrée et/ou à l'accès selon la revendication 7, **caractérisée en ce que** le rouleau presseur (39), le rouleau d'entraînement (9) et le moteur d'entraînement (11) sont montés sur une console de support (33) qui est supportée avec possibilité de pivotement au moyen d'un goujon de pivot (40) ayant un axe de pivotement parallèle à l'axe du rouleau presseur (39) sur le profilé d'extrémité (5) ou sur une extrémité arrière des parties latérales (4).

9. Aide à l'entrée et/ou à l'accès selon l'une des revendications 1 à 8, **caractérisée en ce que** l'élément d'entraînement (10) est entouré par un boîtier (42) sensiblement fermé.

10. Aide à l'entrée et/ou à l'accès selon la revendication 9, **caractérisée en ce que** le boîtier (42) présente une fente allongée (43) ouverte vers le haut et couverte par au moins une lèvre d'étanchéité.

11. Aide à l'entrée et/ou à l'accès selon l'une des revendications 1 à 10, **caractérisée en ce qu'**est fixé sur la face inférieure du cadre (3) un fond recouvrant l'espace intérieur, qui présente une trappe de visite (30) pouvant pivoter vers le bas et s'étendant sensiblement par-dessus la zone des moyens d'entraînement.

12. Aide à l'entrée et/ou à l'accès selon l'une des revendications 4 à 11, **caractérisée en ce que** la palette de marchepied (2) ou le chariot roulant (7) comprend au moins trois paires de roues de roulement (8a, 8b, 8c) disposées les unes derrière les autres, une paire de devant dans le sens de la sortie (8a) roulant sur un rail de roulement inférieur (27a), une paire de derrière dans le sens de la sortie (8b) sur un rail de roulement supérieur (27b) et une paire centrale, destinée à compenser les tolérances et à éviter les mouvements basculants (8c), reposant sur le rail de roulement inférieur (27a).

13. Aide à l'entrée et/ou à l'accès selon l'une des revendications 4 à 12, **caractérisée en ce que** les roues de roulement (8) sont munies d'un revêtement en caoutchouc ou en matière plastique ou se composent de caoutchouc ou de matière plastique.
